# EUROPÄISCHE PATENTSCHRIFT

(11) **EP 1 397 636 B1**
(45) Veröffentlichungstag und Bekanntmachung des Hinweises auf die Patenterteilung: **12.08.2009**
(21) Anmeldenummer: 01960325.7
(22) Anmeldetag: 18.06.2001
(51) Int. Cl.: G01B 5/012

(54) **MEHRKOORDINATEN-TASTMESSGERÄT**
MULTI-COORDINATE SENSING MEASURING DEVICE
APPAREIL DE MESURE DE TYPE PALPEUR A COORDONNEES MULTIPLES

(43) Veröffentlichungstag der Anmeldung: 17.03.2004
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Liska, Horst
(86) Internationale Anmeldenummer: PCT/EP2001/006846
(87) Internationale Veröffentlichungsnummer: WO 2002/103282

(56) Entgegenhaltungen:
- DE-A- 19 502 840
- US-A- 4 447 958
- US-A- 4 752 166
- US-A- 5 365 673

## Beschreibung

Die Erfindung betrifft ein Mehrkoordinaten-Tastmessgerät, welches Abstandmessungen sowohl in Richtung einer Messachse als auch quer dazu erlaubt.

Ein Mehrkoordinaten-Tastmessgerät dieser Art ist aus DE 195 02 840 A1 bekannt. Das Tastmessgerät hat ein Gehäuse und einen in Richtung der Messachse relativ zu dem Gehäuse verschiebbaren, mittels eines Universalgelenks um einen auf der Messachse liegenden Schwenkpunkt allseitig schwenkbar an dem Gehäuse geführten Tasthebel. Der Tasthebel ist federnd in eine Ruhelage vorgespannt und hat einen aus dem Gehäuse herausragenden Tastarm, dessen freies Tastende einen in der Ruhestellung des Tasthebels auf der Messachse liegenden Tast-Bezugspunkt definiert. Mit dem Tastarm ist gleichachsig ein Koppelarm verbunden, dessen bezogen auf den Schwenkpunkt dem Tastende fernes, freies Ende eine in der Ruhestellung des Tasthebels zur Messachse rotationssymmetrische äußere Steuerfläche mit im wesentlichen konvexer Erzeugender bildet. In dem Gehäuse ist ein Kopplungsstück in Richtung der Messachse verschiebbar geführt, dessen Position relativ zu dem Gehäuse von einer Messeinrichtung erfasst wird. Das Kopplungsstück hat eine zum Tastende hin sich erweiternde offene Aussparung, die eine zur Messachse rotationssymmetrische, innere Steuerfläche bildet, an welcher die äußere Steuerfläche des Koppelarms anliegt. Die Steuerflächen bilden ein Koppelgetriebe, welches den Koppelarm mit dem Kopplungsstück in der Weise koppelt, dass der Koppelarm sowohl beim Verschieben des Tastarms in Richtung der Messachse als auch beim Auslenken des Tastarms um den Schwenkpunkt das Kopplungsstück in Richtung der Messachse mitnimmt.

Weitere Mehrkoordinaten-Tastmessgeräte, die sich von dem vorstehend erläuterten Tastmessgerät in erster Linie durch die Konstruktion des Koppelgetriebes unterscheiden, sind aus DE 41 00 323 A1, US 3 660 906, US 5 355 589 und GB 2 094 979 A bekannt.

Bei den bekannten Mehrkoordinaten-Tastmessgeräten werden die Rückstellkräfte des Tasthebels von einer zwischen dem in Richtung der Messachse verschiebbaren Kopplungsstück und dem Gehäuse eingespannten Feder erzeugt, die den Tastarm über das Kopplungsgetriebe in die Ruhestellung vorspannt. Damit wirken sich Fertigungstoleranzen nicht nur der Stellflächen des Koppelgetriebes, sondern auch Fertigungstoleranzen an den Führungsflächen des Kopplungsstücks auf die Messgenauigkeit des Tastmessgeräts aus. Die Führungsflächen herkömmlicher Tastmessgeräte müssen deshalb hochpräzise gefertigt, insbesondere geschliffen werden, was den Herstellungsaufwand und die Herstellungskosten des Tastmessgeräts beträchtlich erhöht, insbesondere wenn die den Abstand ermittelnde oder/und anzeigende Messuhr mit diesem Kopplungsstück gekuppelt ist.

Bei dem aus GB 2 094 979 A bekannten Tastmessgerät ist es bekannt, das relativ zum Gehäuse in Richtung der Messachse verschiebbare Kopplungsstück in einem Linearkugellager zu führen, um Messfehler aufgrund von Reibungshysterese zu verringern. Das Linearkugellager hat vom Gehäuse gesonderte Laufbuchsen und erhöht die Herstellungskosten beträchtlich, wenn es den Präzisionsanforderungen genügen soll.

Es ist Aufgabe der Erfindung, ein Mehrkoordinaten-Tastmessgerät zu schaffen, welches mit vergleichsweise großen Herstellungstoleranzen hergestellt werden kann und trotzdem präzise Abstandsmessungen erlaubt.

Die Erfindung geht von einem Mehrkoordinaten-Tastmessgerät aus, welches umfasst:
ein Gehäuse,
einen in Richtung einer Messachse relativ zu dem Gehäuse verschiebbaren, mittels eines Universalgelenks um einen auf der Messachse liegenden Schwenkpunkt relativ zu dem Gehäuse allseitig schwenkbar geführten, federnd in eine Ruhestellung vorgespannten Tasthebel mit einem aus dem Gehäuse herausragenden Tastarm, dessen freies Tastende einen in der Ruhestellung des Tasthebels auf der Messachse liegenden Tast-Bezugspunkt definiert,
ein an einer Führungsflächenanordnung des Gehäuses in Richtung der Messachse verschiebbar geführtes Kopplungsstück,
ein den Tasthebel mit dem Kopplungsstück koppelndes Koppelgetriebe, welches das Kopplungsstück sowohl beim Verschieben des Tastarms in Richtung der Messachse als auch beim Auslenken des Tastarms um den Schwenkpunkt in Richtung der Messachse mitnimmt, und
eine die Position des Kopplungsstücks bezogen auf das Gehäuse erfassende Messeinrichtung.

Ausgehend von einem solchen Tastmessgerät wird die vorstehende Aufgabe erfindungsgemäß dadurch gelöst, dass das Kopplungsstück und die Führungsflächenanordnung des Gehäuses Laufflächen für Kugeln einer Kugellageranordnung aufweisen, wobei die Lauffläche wenigstens einer der Komponenten - Kopplungsstück und Gehäuse - quer zur Lauffläche elastisch auslenkbar ist und die Kugeln spielfrei zwischen den Laufflächen eingespannt hält. Die vorzugsweise durch einen biegeelastischen, integralen Wandbereich einer dieser Komponenten gebildete Lauffläche gleicht toleranzbedingtes Spiel der Kugeln aus und erlaubt es, dass die Laufflächen durch vergleichsweise kostengünstige Herstellungsverfahren, wie zum Beispiel durch eine Drehbearbeitung oder Reibbearbeitung hergestellt werden können. Es ist zum Beispiel nicht erforderlich, die Laufflächen für die Kugeln präzisionszuschleifen.

In einer bevorzugten Ausgestaltung ist der die Lauffläche bildende Wandbereich als radial elastischer, zur Messachse konzentrischer Rohrabschnitt, insbesondere des Kopplungsstücks ausgebildet. Die Laufflächen des Kopplungsstücks und der Führungsflächenanordnung des Gehäuses sind hierbei zweckmäßigerweise als zueinander konzentrische, kreiszylindrische Flächen ausgebildet. Als herstellungstechnisch einfach hat es sich in diesem Zusammenhang erwiesen, wenn der die Lauffläche bildende, radial elastische Wandbereich des Kopplungsstücks im Bereich wenigstens eines axialen Endes des Kopplungsstücks vorgesehen ist und einen in Richtung der Messachse frei abstehenden Rohrzylinderabschnitt mit bevorzugt gleichmäßiger Wanddicke bildet. Zweckmäßigerweise sind im Bereich beider axialer Enden des Kopplungsstücks derartige Rohrzylinderabschnitte zur Bildung von Laufflächen vorgesehen.

Um gleichmäßige und vorherbestimmbare Trag- und Abwälzeigenschaften der Kugeln einhalten zu können, sind die Kugeln der Kugellageranordnung bevorzugt in einem zwischen den Laufflächen des Kopplungsstücks und des Gehäuses in Richtung der Messachse beweglichen Kugelkäfig drehbar gehalten. Der Kugelkäfig führt bevorzugt wenigstens zwei in Umfangsrichtung sich erstreckende, in axialem Abstand voneinander angeordnete Reihen von Kugeln, die insbesondere im Bereich der beiden axialen Enden des Kopplungsstücks angeordnet sind. Auf diese Weise läßt sich ein vergleichsweise großer Abstand zwischen lediglich zwei Kugelführungsbereichen des Kopplungsstücks einhalten, was der Kippsicherheit des Kopplungsstücks und damit der Messgenauigkeit zugute kommt.

Bei dem Kugelkäfig kann es sich um eine zur Messachse konzentrische Zylinderhülse handeln, die in ihrer Hülsenwand je ein radiales Durchgangsloch zur gesonderten Führung jeder einzelnen Kugel aufweist. Zweckmäßigerweise verengen sich die Durchgangslöcher auf radial einer Seite, so dass die Kugeln in den Durchgangslöchern gegen Herausfallen gesichert sind, was die Montage des Tastmessgeräts erleichtert.

Es ist bekannt, das Gehäuse und das Kopplungsstück des Tastmessgeräts aus Aluminium oder einer Aluminiumlegierung herzustellen, wobei Präzisionsflächen üblicherweise mit einer vergleichsweise dicken Harteloxierungsschicht versehen werden, um sie dauerhaft gegen Beschädigung und Abnutzung zu schützen. Überraschenderweise hat sich nun gezeigt, dass die Toleranzen bei der Herstellung des Tastmessgeräts vergleichsweise groß bemessen werden können und damit die Herstellungskosten niedrig gehalten werden können, wenn zumindest die aus Aluminium oder einer Aluminiumlegierung bestehende Lauffläche des Kopplungsstücks und/oder des Gehäuses mit einer harteloxierten Oberflächenschicht von weniger als 10µm, insbesondere weniger als 6µm Dicke versehen ist. Eine derartige harteloxierte Oberflächenschicht ist wesentlich dünner als Schichten, die bisher zum Oberflächenschutz solcher Aluminiumkomponenten eingesetzt wurde. Als Laufbahnen für Kugellager genutzt sind solche Oberflächenschichten noch so weich, dass sich die Kugeln der Kugellageranordnung im Gebrauch selbsttätig eine muldenförmige Laufbahn einwalzen können. Die Kugeln schaffen sich damit selbst ein Laufbahnbett und gleichen selbsttätig Herstellungstoleranzen aus. Die vorstehende Idee lässt sich nicht nur bei den eingangs erläuterten Tastmessgeräten mit elastisch auslenkbaren Kugellagerlaufflächen einsetzen, sondern auch bei solchen Tastmessgeräten, bei welchen beide Laufflächenpaarungen des Kugellagers im wesentlichen unelastisch sind. Die Idee dünner harteloxierter Oberflächenschichten hat deshalb selbständige erfinderische Bedeutung.

Im folgenden wird ein Ausführungsbeispiel der Erfindung anhand einer Zeichnung näher erläutert. Hierbei zeigt:
- Figur 1: einen Axiallängsschnitt durch ein Mehrkoordinaten-Tastmessgerät und
- Figur 2: ein Detail II aus Figur 1.

Das allgemein mit 1 bezeichnete Tastmessgerät umfasst ein Gehäuse 3, an dem ein allgemein mit 5 bezeichneter Tasthebel in Richtung einer durch das Gehäuse 3 definierten Messachse 7 verschiebbar geführt ist. Der Tasthebel 5 ist mittels eines Universalgelenks, hier in Form eines Kugelgelenks 9 darüber hinaus um einen auf der Messachse 7 liegenden Schwenkpunkt 11 allseitig schwenkbar an dem Gehäuse 3 geführt und wird von einer Rückstellfeder 13 in nachfolgend noch näher erläuterter Weise in die in der Zeichnung dargestellte Ruhestellung federnd vorgespannt. Der Tasthebel 5 hat einen aus dem Gehäuse herausragenden Tastarm 15, dessen freies, durch eine Kugel gebildetes Tastende 17 einen in der Ruhestellung des Tasthebels 5 auf der Messachse 7 liegenden Tast-Bezugspunkt 19 definiert. Bezogen auf den Schwenkpunkt 11 ragt ein Koppelarm 21 des Tasthebels 5 entgegengesetzt zum Tastarm 15 in eine kreiszylindrische, zur Messachse 7 zentrische Führungsöffnung 23 des Gehäuses 3 hinein. In der Führungsöffnung 23 istein im wesentlichen hülsenförmiges Kopplungsstück 25 in Richtung der Messachse 7 mittels einer nachfolgend noch näher erläuterten, allgemein mit 27 bezeichneten Kugellageranordnung verschiebbar geführt. Eine an dem Gehäuse 3 gehaltene Messuhr 29 erfasst die Position des Kopplungsstücks 25 relativ zu dem Gehäuse 3 und ist hierzu mit einem in ein Loch des Kopplungsstücks 25 eingreifenden Kopplungsstift 30 versehen. Bei der Messuhr 29 kann es sich, wie im vorliegenden Fall, um eine mechanische Längenmessuhr handeln; geeignet sind aber auch andere Längenmesssensoren, die die Position des Kopplungsstücks 25 relativ zum Gehäuse 3 der Größe nach erfassen können, wie zum Beispiel elektronische Messuhren oder auch nur Messwertgeber, die der Position entsprechende Signale erzeugen.

Das Kopplungsstück 25 hat im Bereich seines dem Schwenkpunkt 11 axial fernen Endes eine innere Steuerfläche 31 in Form einer Kugelstumpffläche mit geradliniger Erzeugender, mit der es an einer am freien Ende des Koppelarms 21 gebildeten konvexen äußeren Steuerfläche 33 des Tasthebels 5 anliegt. Die innere Steuerfläche 31 ist zur Messachse 7 rotationssymmetrisch, während die äußere Steuerfläche 33 zu der in der Ruhestellung des Tasthebels 5 mit der Messachse 7 zusammenfallenden Geraden durch den Tast-Bezugspunkt 19 und den Schwenkpunkt 11 rotationssymmetrisch ist. Die äußere Steuerfläche 33 hat eine kreisabschnittförmige Erzeugende, die im vorliegenden Fall durch eine am freien Ende des Koppelarms 21 befestigte Kugel 35 realisiert ist. Die äußere Steuerfläche 33 kann aber auch so ausgebildet sein, dass ihre kreisabschnittförmige Erzeugende einen exzentrisch zu der genannten Geraden liegenden Kreismittelpunkt hat. Die mit ihrem einen Ende in einer Ringnut 37 des Bodens der Führungsöffnung 23 und mit ihrem anderen Ende an einem Ringansatz 39 des Kopplungsstücks 25 geführte Rückholfeder 13 spannt das Kopplungsstück 25 in Richtung auf das Tastende 17 zu vor und sorgt zugleich für einen Anlagekontaktdruck der aneinanderliegenden Steuerflächen 31, 33. Anstelle des erläuterten, durch die Steuerflächen 31, 33 gebildeten Koppelgetriebes können auch andere Varianten eines Koppelgetriebes vorgesehen sein.

Im Betrieb wird das Tastmessgerät 1 mittels eines bei 41 angedeuteten, zur Messachse 7 gleichachsigen Steilkegelschaft in einer Werkzeugmaschine oder einem Messgerät oder dergleichen gehalten. Bei einer im Messbetrieb sich ergebenden Stellbewegung des Tastendes 17 in Richtung der Messachse 7 nimmt der Koppelarm 21 das Kopplungsstück 25 mit, welches seinerseits die Messuhr 29 stellt. Bei einer Stellbewegung des Tastendes 17 quer zur Messachse 7 schwenkt der Koppelarm 21 um den durch das Kugelgelenk 9 definierten Schwenkpunkt 11. Die bei dieser Schwenkbewegung des Koppelarms 21 entlang ihrer Erzeugenden aneinandergleitenden Steuerflächen 31, 33 setzen die Schwenkbewegung des Tasthebels 5 in eine axiale Bewegung des hülsenförmigen Kopplungsstücks 25 um, derart, dass die Messuhr 27 den radialen Abstand des Tast-Bezugspunkts 19 von der Messachse 7 misst. Durch die erläuterte Gestaltung der Steuerflächen 31, 33 wird erreicht, dass der radiale Abstand des Tast-Bezugspunkts 19 von der Messachse 7 in einem linear proportionalen 1:1 Verhältnis in den durch die Schwenkbewegung des Tasthebels 5 bewirkten axialen Stellhub des Kopplungsstücks 25 umgesetzt wird.

Das Kugelgelenk 9 hat eine integral mit dem Koppelarm 21 ausgebildete, zum Schwenkpunkt 11 zentrische Gelenkkugel 43, die in einem die Führungsöffnung 23 zum Tastende 17 hin begrenzenden Gelenkpfannenteil 45 sitzt. Das Gelenkpfannenteil 45 ist in das Gehäuse 3 eingeschraubt und setzt sich dem Tastende 17 entgegengesetzt in einer zylindrischen Führung 47 fort, die die Gelenkkugel 43 bei der axialen Verschiebebewegung des Tasthebels 5 radial zur Messachse 7 führt. Zur Sicherung des Tasthebels 5 gegen Überdrehen um die Messachse 7 ist in einer den Schwenkpunkt 11 in der Ruhestellung des Tasthebels 5 einschließenden, achsnormalen Ebene ein Stift 49 an dem Gelenkpfannenteil 45 vorgesehen, der in einen in einer Axiallängsschnittebene des Tasthebels 5 in der Gelenkkugel 43 sich erstreckenden Schlitz 51 eingreift.

Der aus dem Gehäuse 3 vorstehende Tastarm 15 kann im Messbetrieb zum Beispiel aus Unachtsamkeit Stoßbelastungen ausgesetzt sein oder aber der Tastarm 15 wird axial oder radial bis an seine Hubgrenzen ausgelenkt. Für eine axiale Hubbegrenzung der Bewegung des Tasthebels 5 hat das Kopplungsstück 25 dem freien Ende des Koppelhebels 21 benachbart eine zentrische Durchtrittsöffnung 53, in die ein vom Boden der Führungsausnehmung 23 des Gehäuses abstehender, zentrischer Vorsprungzapfen 55 eingreifen und an der Kugel 35 anschlagen kann. Axial auf das Tastende wirkende Anschlagkräfte werden auf diese Weise direkt in das Gehäuse geleitet und nicht von den Steuerflächen 31, 33 aufgenommen. Die radiale Hubbewegung des Tastarms 5 wird durch eine Anschlagfläche 57 begrenzt, die an eine axial seitlich der inneren Steuerfläche 31 anschließende, ringzylindrische innere Anschlagfläche 59 des Kopplungsstücks 25 anschlagen kann. Einen weiteren Schutz der Steuerflächen 31, 33, wie auch der Messuhr 27 ermöglicht ein als Keramikhülse ausgebildetes Soll-Bruchteil 61 des Tastarms 15.

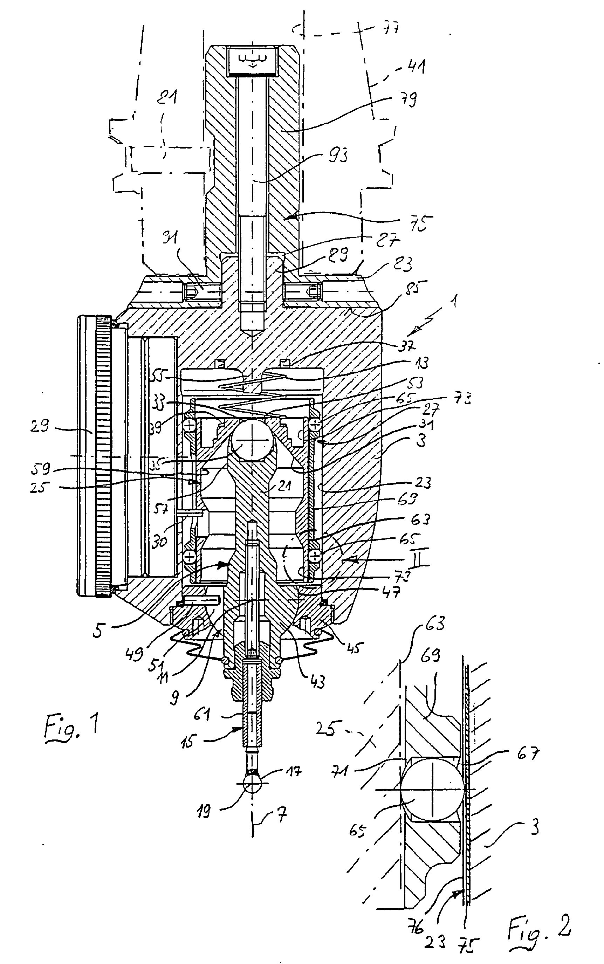

Das Kopplungsstück 25 hat einen kreiszylindrischen Außenmantel 63, der ein integral durch das Kopplungsstück 25 gebildete Lauffläche für Kugeln 65 der Kugellageranordnung 27 bilden. Die Kugeln der Kugellageranordnung 27 stützen sich andererseits an der gleichfalls eine Lauffläche bildenden, zur Messachse 7 und damit zum Umfangsmantel 63 koaxialen, kreiszylindrischen Führungsöffnung 23 des Gehäuses 3 ab. Die Kugeln 65 sind in zwei in Umfangsrichtung sich erstreckenden Reihen jeweils im Bereich der axialen Enden des Kopplungsstücks 25 angeordnet und werden, wie am besten Figur 2 zeigt, jeweils einzeln in zugeordneten Durchgangslöchern 67 eines in Richtung der Messachse 7 verschiebbaren Kugelkäfigs 69 geführt. Zum Kupplungsstück 25 hin sind die Durchgangslöcher 67 mit einer Verengung 71 versehen, die die Kugeln 65 in den Durchgangslöchern 67 sichern, wenn der Kugelkäfig 69 für sich genommen bereits in die Führungsöffnung 23 eingesetzt ist, ohne dass bereits das Kopplungsstück 25 montiert wurde.

Die Mantelfläche 63 des Kopplungsstücks 25 und der Innenmantel der Führungsöffnung 23 können mit vergleichsweise großen Toleranzen beispielsweise durch eine Drehbearbeitung oder Reibbearbeitung hergestellt sein. Um dennoch radiales Führungsspiel zwischen dem Kopplungsstück 25 und dem Gehäuse 3 weitgehendst auszuschließen, hat das Kopplungsstück 25 im Bereich seiner radialen Enden und damit im Verschiebewegbereich der Kugeln 65 die Form relativ dünnwandiger und damit radial elastisch auslenkbarer Rohrabschnitte 73, die bei hinreichend groß gewähltem Durchmesser der Kugeln 65 diese radial nach außen gegen den Innenmantel der Führungsöffnung 23 drücken. Die Rohrabschnitte 73 haben gleichmäßige Wanddicke sowohl in Umfangsrichtung als auch in axialer Richtung und sorgen so für eine gleichmäßige Belastung sämtlicher Kugeln 65.

Das Kopplungsstück 25 und auch das Gehäuse 3 bestehen aus Aluminium oder einer Aluminiumlegierung und sind zumindest an den die Laufflächen der Kugeln 65 bildenden Flächenbereichen mit einer Hartoxidschicht einer Dicke von weniger als 10µm, beispielsweise 3 bis 5µm beschichtet. Eine solche Schicht, wie sie bei 75 für das Gehäuse 3 in übertriebenem Maßstab dargestellt ist und auch an dem Kopplungsstück 25 vorgesehen ist, ist nachgiebig genug, um es den Kugeln 65 zu erlauben, die Schutzschicht 75 muldenförmig gleichfalls relativ weiche Aluminiummaterial des Gehäuses 3 bzw. des Kopplungsstücks 25 einzuwalzen. Auf diese Weise laufen sich in den Laufflächen des Gehäuses 3 und des Kopplungsstücks 25 im Gebrauch selbsttätig engpassende Laufbahnrillen 76 ein, die zudem dafür sorgen, dass das Kopplungsstück 25 verdrehgesichert verschiebbar geführt ist. Trotz relativ großer Herstellungstoleranzen wird auf diese Weise eine sehr exakte, spielfreie Führung des Kopplungsstücks 25 in dem Gehäuse 3 erreicht.

Die Achse des Steilkegelschafts 41 muss gleichachsig zu der durch die übrigen Komponenten des Tastmessgeräts 1 bestimmten Messachse 7 verlaufen. Um Fluchtungsfehler ausgleichen zu können, ist das Gehäuse 3 an dem Steilkegelschaft 41 mittels eines Adapters 75 befestigt, der eine achsparallele Justierung der Messachse 7 des Gehäuses 3 relativ zur Achse des Steilkegelschafts 41 erlaubt. Der Adapter 75 hat einen im Passsitz in einer zentrischen durchgehenden Bohrung 77 des Steilkegelschafts 41 sitzenden Schaft 79 und wird mittels einer bei 81 angedeuteten Klemmschraube an dem Steilkegelschaft 41 auswechselbar gehalten. Zwischen dem Steilkegelschaft 41 und dem Gehäuse 3 trägt der Schaft 79 einen Ringflansch 83 mit einer zur Achse des Steilkegelschafts 41 exakt senkrecht verlaufenden, planen Anlagefläche 85 für das mit einer planen Gegenfläche versehene Gehäuse 3. In die Anlagefläche 85 ist zentrisch eine Zentrieröffnung 87 eingesenkt, in die mit radialem Spiel ein vom Gehäuse 3 abstehender Zentrierzapfen 89 eingreift. Wenigstens drei am Umfang des Ringflansches 83 verteilt angeordnete, radiale Justierschrauben 91 erlauben eine radiale Justierung des an der Anlagefläche 85 verschiebbar geführten Gehäuses 3. Eine zentrische Befestigungsschraube 93 hält das Gehäuse 3 am Adapter 75. Für die radiale Justierung des Gehäuses 3 relativ zu dem Steilkegelschaft 41 wird die Schraube 93 zunächst leicht angezogen, um das Gehäuse 3 etwas gegen die Anlagefläche 91 zu spannen, nach der Justierung halten die Justierschrauben 91 das Gehäuse 3 in der gewünschten Lage fest, bis die Schraube 93 vom gehäusefernen Ende des Steilkegelschafts 41 her festgezogen ist.

## Patentansprüche

1. Mehrkoordinaten-Tastmessgerät, umfassend:
- ein Gehäuse (3),
- einen in Richtung einer Messachse (7) relativ zu dem Gehäuse (3) verschiebbaren und mittels eines Universalgelenks (9) um einen auf der Messachse (7) liegenden Schwenkpunkt (11) relativ zu dem Gehäuse (3) allseitig schwenkbar geführten, federnd in eine Ruhestellung vorgespannten Tasthebel (5) mit einem aus dem Gehäuse (3) herausragenden Tastarm (15), dessen freies Tastende (17) einen in der Ruhestellung des Tasthebels (5) auf der Messachse (7) liegenden Tast-Bezugspunkt (19) definiert,
- ein an einer Führungsflächenanordnung (23) des Gehäuses (3) in Richtung der Messachse (7) verschiebbar geführtes Kopplungsstück (25),
- ein den Tasthebel (5) mit dem Kopplungsstück (25) koppelndes Koppelgetriebe (31, 33), welches das Kopplungsstück (25) sowohl beim Verschieben des Tastarms (5) in Richtung der Messachse (7) als auch beim Auslenken des Tastarms (5) um den Schwenkpunkt (11) in Richtung der Messachse (7) mitnimmt,
- eine die Position des Kopplungsstücks (25) bezogen auf das Gehäuse (3) erfassende Messeinrichtung (21),
**dadurch gekennzeichnet, dass**
das Kopplungsstück (25) und die Führungsflächenanordnung (23) des Gehäuses (3) Laufflächen für Kugeln (65) einer Kugellageranordnung (27) aufweisen, wobei die Lauffläche wenigstens einer der Komponenten - Kopplungsstück (25) und Gehäuse (3) - quer zur Lauffläche elastisch auslenkbar ist und die Kugeln (65) spielfrei zwischen den Laufflächen eingespannt hält.

2. Mehrkoordinaten-Tastmessgerät nach Anspruch 1, **dadurch gekennzeichnet, dass** die Lauffläche der einen Komponente an einem biegeelastischen, integralen Wandbereich (73) dieser Komponente vorgesehen ist.

3. Mehrkoordinaten-Tastmessgerät nach Anspruch 2, **dadurch gekennzeichnet, dass** der die Lauffläche bildende Wandbereich (73) als radial elastischer, zur Messachse (7) konzentrischer Rohrabschnitt ausgebildet ist.

4. Mehrkoordinaten-Tastmessgerät nach einem der Ansprüche 1 bis 3, **dadurch gekennzeichnet, dass** die Laufflächen des Kopplungsstücks (25) und der Führungsflächenanordnung des Gehäuses (3) als zu einander konzentrische, kreiszylindrische Flächen ausgebildet sind und die elastische Lauffläche an einem radial elastischen Wandbereich (73) des Kopplungsstücks (25) vorgesehen ist.

5. Mehrkoordinaten-Tastmessgerät nach Anspruch 4, **dadurch gekennzeichnet, dass** der die Lauffläche bildende radial elastische Wandbereich (73) des Kopplungsstücks (25) im Bereich wenigstens eines axialen Endes des Kopplungsstücks (25) vorgesehen ist und als in Richtungen der Messachse (7) frei abstehender Rohrzylinderabschnitt ausgebildet ist.

6. Mehrkoordinaten-Tastmessgerät nach Anspruch 5, **dadurch gekennzeichnet, dass** der Rohrzylinderabschnitt (73) zumindest in seinem als Lauffläche genutzten Bereich gleichmäßige Wanddicke hat.

7. Mehrkoordinaten-Tastmessgerät nach Anspruch 5 oder 6, **dadurch gekennzeichnet, dass** im Bereich beider axialer Enden des Kopplungsstücks (25) Laufflächen bildende Rohrzylinderabschnitte vorgesehen sind.

8. Mehrkoordinaten-Tastmessgerät nach einem der Ansprüche 1 bis 7, **dadurch gekennzeichnet, dass** die Kugeln (65) der Kugellageranordnung (27) in einem zwischen den Laufflächen des Kopplungsstücks (25) und des Gehäuses (3) in Richtung der Messachse (7) beweglichen Kugelkäfig (69) drehbar gehalten sind.

9. Mehrkoordinaten-Tastmessgerät nach Anspruch 8, **dadurch gekennzeichnet, dass** der Kugelkäfig (69) wenigstens zwei in Umfangsrichtung sich erstreckende, in axialem Abstand voneinander angeordnete Reihen von Kugeln (65) führt.

10. Mehrkoordinaten-Tastmessgerät nach Anspruch 9, **dadurch gekennzeichnet, dass** die Kugelreihen im Bereich beider axialer Enden des Kopplungsstücks (25) angeordnet sind.

11. Mehrkoordinaten-Tastmessgerät nach einem der Ansprüche 8 bis 10, **dadurch gekennzeichnet, dass** der Kugelkäfig (69) als zur Messachse (7) konzentrische Zylinderhülse ausgebildet ist und in seiner Hülsenwand je ein radiales Durchgangsloch (67) zur gesonderten Führung jeder einzelnen Kugel (65) aufweist.

12. Mehrkoordinaten-Tastmessgerät nach Anspruch 11, **dadurch gekennzeichnet, dass** die Durchgangslöcher (67) auf radial einer Seite, insbesondere auf der zum Kopplungsstück (25) benachbarten Seite, jeweils eine Verengung aufweisen, die die Kugel (65) in dem Durchgangsloch (67) gegen Herausfallen sichert.

13. Mehrkoordinaten-Tastmessgerät nach einem der Ansprüche 1 bis 12, **dadurch gekennzeichnet,dass**
der Tasthebel (5) ferner einen Koppelarm (21) umfasst, dessen bezogen auf den Schwenkpunkt (11) dem Tastende (19) fernes, freies Ende eine in der Ruhestellung des Tasthebels (5) zur Messachse (7) rotationssymmetrische äußere Steuerfläche (33) des Koppelgetriebes (31, 33) mit im Wesentlichen konvexer Erzeugender, insbesondere einer kreisabschnittförmigen Erzeugenden, bildet,
und dass das Kopplungsstück (25) eine zum Tastende (19) hin sich erweiternde und offene Aussparung aufweist, die eine zur Messachse (7) rotationssymmetrische, innere Steuerfläche (31) des Koppelgetriebes (31, 33), insbesondere in Form einer Kegelstumpffläche mit geradliniger Erzeugender bildet, an der die äußere Steuerfläche (33) des Koppelarms (21) anliegt.

14. Mehrkoordinaten-Tastmessgerät nach einem der Ansprüche 1 bis 13, wobei das Gehäuse (3) an einem Spannschaft (41) gehalten ist,
**dadurch gekennzeichnet, dass** das Gehäuse (3) und der Spannschaft (41) zur Messachse (7) senkrechte, einander zugeordnete Anlageflächen (85) aufweisen und durch wenigstens eine in Richtung der Messachse (7) verlaufende Spannschraube (93) aneinander befestigt sind,
dass das Gehäuse (3) oder der Spannschaft (41) einen zur Messachse dieses Teils zentrischen Zentrierzapfen (89) trägt, der mit radialem Spiel in eine Zentrieröffnung (87) des anderen Teils eingreift, und dass am Umfang der Zentrieröffnung (87) wenigstens drei radial zur Messachse (7) gegen den Zentrierzapfen (89) verstellbare Justierschrauben (91) verteilt angeordnet sind.

15. Mehrkoordinaten-Tastmessgerät nach einem der Ansprüche 1 bis 14 oder nach dem Oberbegriff von Anspruch 1 oder nach einem der Ansprüche 2 bis 14, rückbezogen auf den Oberbegriff von Anspruch 1, **dadurch gekennzeichnet, dass**
das Kopplungsstück (25) oder/und die Führungsflächenanordnung des Gehäuses (3) aus Aluminium oder einer Aluminiumlegierung bestehen und Laufflächen für Kugeln der Kugellageranordnung bilden und
dass zumindest die Lauffläche wenigstens einer der Komponenten - Kopplungsstück (25) und Gehäuse (3) - mit harteloxierter Oberflächenschicht (75) von weniger als 10 µm, insbesondere weniger als 6µm Dicke versehen ist.

16. Mehrkoordinaten-Tastmessgerät nach Anspruch 15, **dadurch gekennzeichnet, dass** das Kopplungsstück (25) und das Gehäuse (3) insgesamt aus Aluminium oder einer Aluminiumlegierung bestehen.

17. Mehrkoordinaten-Tastmessgerät nach Anspruch 15 oder 16, **dadurch gekennzeichnet, dass** die Lauffläche des Kopplungsstücks (25) und des Gehäuses (3) durch Drehbearbeitung oder Reibbearbeitung hergestellt sind.

18. Mehrkoordinaten-Tastmessgerät nach einem der Ansprüche 15 bis 17, **dadurch gekennzeichnet, dass** die Kugeln (65) der Kugellageranordnung (27) Übermaß haben, bezogen auf den Abstand der Laufflächen von Kopplungsstück (25) und Gehäuse (3) im Neuzustand, derart, dass sie im Betrieb Laufbahnen in die Laufflächen einwalzen.

## Claims

1. Multi-coordinate sensing measuring device, comprising:
- a housing (3),
- a sensing lever (5), which is displaceable in the direction of a measurement axis (7) relative to the housing (3) and guided pivotably all around relative to the housing (3) by a universal joint (9) about a pivot point (11) located on the measurement axis (7) and biased spring-like in a position of rest, with a sensing arm (15) projecting out of the housing (3), the free sensing end (17) of which sensing arm defines a sensing reference point (19) in the position of rest of the sensing lever (5) on the measurement axis (7),
- a coupling piece (25) guided displaceably on a guiding surface arrangement (23) of the housing (3) in the direction of the measurement axis (7),
- a linkage (31, 33) coupling the sensing lever (5) with the coupling piece (25), which carries the coupling piece (25) both on displacing the sensing arm (5) in the direction of the measurement axis (7) and on displacing the sensing arm (5) about the pivot point (11) in the direction of the measurement axis (7),
- a measuring device (21) detecting the position of the coupling piece (25) relative to the housing (3),
**characterised in that** the coupling piece (25) and the guiding surface arrangement (23) of the housing (3) have running surfaces for balls (65) of a ball bearing arrangement (27), whereby the running surface of at least one of the components - coupling piece (25) and housing (3) - is displaceable flexibly at right angles to the running surface and holds the balls (65) clamped in a play free manner between the running surfaces.

2. Multi-coordinate sensing measuring device according to claim 1, **characterised in that** the running surface of one component is provided on a flexible, integral wall area (73) of said component.

3. Multi-coordinate sensing measuring device according to claim 2, **characterised in that** the wall area (73) forming the running surface is designed as a radially elastic tube section that is concentric in relation to the measurement axis (7).

4. Multi-coordinate sensing measuring device according to one of claims 1 to 3, **characterised in that** the running surfaces of the coupling piece (25) and the guiding surface arrangement of the housing (3) are designed as circular cylindrical surfaces that are concentric to one another and the flexible running surface is provided on a radially flexible wall area (73) of the coupling piece (25).

5. Multi-coordinate sensing measuring device according to claim 4, **characterised in that** the radially elastic wall area (73) of the coupling piece (25) forming the running surface is provided in the region of at least one axial end of the coupling piece (25) and is in the form of a tubular cylindrical section freely extending in directions of the measurement axis (7).

6. Multi-coordinate sensing measuring device according to claim 5, **characterised in that** the tubular cylindrical section (73) has a uniform wall thickness at least in its area used as a running surface.

7. Multi-coordinate sensing measuring device according to claim 5 or 6, **characterised in that** in the region of both axial ends of the coupling piece (25) tubular cylindrical sections forming running surfaces are provided.

8. Multi-coordinate sensing measuring device according to one of claims 1 to 7, **characterised in that** the balls (65) of the ball bearing arrangement (27) are held rotatably in a ball cage (69) moving between the running surfaces of the coupling piece (25) and the housing (3) in the direction of the measurement axis (7).

9. Multi-coordinate sensing measuring device according to claim 8, **characterised in that** the ball cage (69) guides at least two rows of balls (65) extending in circumferential direction and spaced apart from one another axially.

10. Multi-coordinate sensing measuring device according to claim 9, **characterised in that** the rows of balls are arranged in the region of both axial ends of the coupling piece (25).

11. Multi-coordinate sensing measuring device according to one of claims 8 to 10, **characterised in that** the ball cage (69) is designed as a cylinder sleeve concentric to the measurement axis (7) and in its sleeve wall has a radial through hole (67) for the individual guiding of each ball (65).

12. Multi-coordinate sensing measuring device according to claim 11, **characterised in that** the through holes (67) on radially one side, in particular on the side adjacent to the coupling piece (25), each have a narrowing, which prevents the balls (65) in the through hole (67) from falling out.

13. Multi-coordinate sensing measuring device according to one of claims 1 to 12, **characterised in that** the sensing lever (5) also comprises a coupling arm (21), the free end of which remote from the sensing end (19) in relation to the pivot point (11) forms an outer control face (33) of the linkage (31, 33) rotationally symmetrical in the position of rest of the sensing lever (5) to the measurement axis (7), with a substantially convex generator, in particular a circular section-like generator, and **in that** the coupling piece (25) has an open recess expanding towards the sensing end (19), which recess forms an inner control surface (31) of the linkage (31, 33) rotationally symmetrical to the measurement axis (7), in particular in the form of a truncated cone surface with a straight generator, on which the outer control surface (33) of the coupling arm (21) bears.

14. Multi-coordinate sensing measuring device according to one of claims 1 to 13, wherein the housing (3) is held on a clamping shaft (41), **characterised in that** the housing (3) and the clamping shaft (41) have bearing surfaces (85) assigned to one another perpendicular to the measurement axis (7) and are secured to one another by at least one clamping screw (93) running in the direction of the measurement axis (7),
**in that** the housing (3) or the clamping shaft (41) supports a centring pin (89) central to the measurement axis of said part, which centring pin engages with radial play in a centring opening (87) of the other part, and **in that** on the circumference of the centring opening (87) at least three adjusting screws (91) adjustable radially in relation to the measurement axis (7) against the centring pin (89) are distributed.

15. Multi-coordinate sensing measuring device according to one of claims 1 to 14, or according to the preamble of claim 1 or according to one of claims 2 to 14, referring back to the preamble of claim 1, **characterised in that** the coupling piece (25) and/or the guiding surface arrangement of the housing (3) are made of aluminium or an aluminium alloy and form running surfaces for balls of the ball bearing arrangement and **in that** at least the running surface of at least one of the components - coupling piece (25) and housing (3) - is provided with a hard anodic coating layer (75) with a thickness of less than 10 µm, in particular less than 6 µm.

16. Multi-coordinate sensing measuring device according to claim 15, **characterised in that** the coupling piece (25) and the housing (3) are made completely of aluminium or an aluminium alloy.

17. Multi-coordinate sensing measuring device according to claim 15 or 16, **characterised in that** the running surface of the coupling piece (25) and the housing (3) are produced by turning or reaming.

18. Multi-coordinate sensing measuring device according to one of claims 15 to 17, **characterised in that** the balls (65) of the ball bearing arrangement (27) are oversized in relation to the spacing of the running surfaces from the coupling piece (25) and housing (3) in new condition, such that during operation they roll running tracks into the running surfaces.

## Revendications

1. Appareil de mesure de type palpeur à coordonnées multiples, comportant :
- un boîtier (3),
- un levier palpeur (5) déplaçable par rapport au boîtier (3) en direction d'un axe de mesure (7), prétendu par un ressort dans une position de repos, guidé de manière pivotable de tous les côtés par rapport au boîtier (3) autour d'un point de pivotement (11) situé sur l'axe de mesure (7) au moyen d'un joint articulé (9), et doté d'un bras palpeur (15) dépassant du boîtier (3) dont l'extrémité palpeuse (17) définit un point de référence de contact (19) situé sur l'axe de mesure (7) à la position de repos du levier palpeur (5),
- un élément de couplage (25) guidé de manière déplaçable dans la direction de l'axe de mesure (7) situé sur un agencement plat de guidage (23) du boîtier (3),
- un engrenage couplé (31, 33) couplant le levier palpeur (5) avec l'élément de couplage (25), lequel engrenage entraîne l'élément de couplage (25) aussi bien lors du décalage du bras palpeur (5) dans la direction de l'axe de mesure (7) que lors du basculement du bras palpeur (5) autour du point de pivotement (11) dans la direction de l'axe de mesure (7),
- un système de mesure (21) détectant la position de l'élément de couplage (25) par rapport au boîtier (3),
**caractérisé en ce que**
l'élément de couplage (25) et l'agencement plat de guidage (23) du boîtier (3) comportent des surfaces de roulement pour des billes (65) d'un agencement de roulement à billes (27), sachant que la surface de roulement d'au moins un des composants - élément de couplage (25) et boîtier (3) - peut être basculée de manière élastique en travers de la surface de roulement et qu'elle tient les billes (65) serrées sans jeu entre les surfaces de roulement.

2. Appareil de mesure de type palpeur à coordonnées multiples selon la revendication 1, **caractérisé en ce que** la surface de roulement de l'un des composants est prévue sur une zone de paroi (73), intégrale et dotée d'une élasticité de flexion, de ces composants.

3. Appareil de mesure de type palpeur à coordonnées multiples selon la revendication 2, **caractérisé en ce que** la zone de paroi (73) formant la surface de roulement a la forme d'une section de tube radialement élastique et concentrique par rapport à l'axe de mesure (7).

4. Appareil de mesure de type palpeur à coordonnées multiples selon l'une quelconque des revendications 1 à 3, **caractérisé en ce que** les surfaces de roulement de l'élément de couplage (25) et de l'agencement plat de guidage du boîtier (3) ont la forme de surfaces cylindriques circulaires, concentriques l'unes par rapport à l'autre et **en ce que** la surface de roulement élastique est prévue sur une zone de paroi (73) radialement élastique de l'élément de couplage (25).

5. Appareil de mesure de type palpeur à coordonnées multiples selon la revendication 4, **caractérisé en ce que** la zone de paroi (73) de l'élément de couplage (25), radialement élastique et formant la surface de roulement, est prévue dans la zone au moins d'une extrémité axiale de l'élément de couplage (25) et qu'elle est formée par une section de tube cylindrique librement écartée en direction de l'axe de mesure (7).

6. Appareil de mesure de type palpeur à coordonnées multiples selon la revendication 5, **caractérisé en ce que** la section de tube cylindrique (73) a une épaisseur de paroi régulière au moins dans sa zone servant de surface de roulement.

7. Appareil de mesure de type palpeur à coordonnées multiples selon la revendication 5 ou 6, **caractérisé en ce que** des sections de tube cylindrique formant des surfaces de roulement sont prévues dans la zone des deux extrémités axiales de l'élément de couplage (25).

8. Appareil de mesure de type palpeur à coordonnées multiples selon l'une quelconque des revendications 1 à 7, **caractérisé en ce que** les billes (65) de l'agencement de roulement à billes (27) sont maintenues tout en pouvant tourner dans une cage à billes (69) mobile dans la direction de l'axe de mesure (7) entre les surfaces de roulement de l'élément de couplage (25) et du boîtier (3).

9. Appareil de mesure de type palpeur à coordonnées multiples selon la revendication 8, **caractérisé en ce que** la cage à billes (69) guide au moins deux rangées de billes (65) disposées avec un écart axial les unes des autres et s'étendant le long du pourtour.

10. Appareil de mesure de type palpeur à coordonnées multiples selon la revendication 9, **caractérisé en ce que** les rangées de billes sont disposées dans la zone des deux extrémités axiales de l'élément de couplage (25).

11. Appareil de mesure de type palpeur à coordonnées multiples selon l'une quelconque des revendications 8 à 10, **caractérisé en ce que** la cage à billes (69) est formée par un manchon cylindrique concentrique à l'axe de mesure (7) et qu'elle comporte dans sa paroi de manchon à chaque fois un trou de passage radial (67) pour le guidage particulier de chaque bille (65).

12. Appareil de mesure de type palpeur à coordonnées multiples selon la revendication 11, **caractérisé en ce que** les trous de passage (67) comportent chacun un rétrécissement disposé radialement sur un côté, en particulier sur le côté voisin de l'élément de couplage (25), lequel rétrécissement empêchant la bille (65) de tomber dans le trou de passage (67).

13. Appareil de mesure de type palpeur à coordonnées multiples selon l'une quelconque des revendications 1 à 12, **caractérisé en ce que**
le levier palpeur (5) comporte en plus un bras de couplage (21) dont l'extrémité libre, distante de l'extrémité palpeuse (19) par rapport au point de pivotement (11) forme une surface de commande (33) externe de l'engrenage couplé (31, 33), avec une symétrie de rotation par rapport l'axe de mesure (7) à la position de repos du levier palpeur (5) et avec une génératrice pratiquement convexe, en particulier avec une génératrice en forme de segment de cercle,
et **en ce que** l'élément de couplage (25) comporte un évidement ouvert et s'élargissant vers l'extrémité palpeuse (19) qui forme une surface de commande (31) interne de l'engrenage couplé (31, 33) avec une symétrie de rotation par rapport à l'axe de mesure (7), en particulier en forme d'une surface de cône tronqué avec une génératrice rectiligne, sur laquelle la surface de commande (33) externe du bras de couplage (21) repose.

14. Appareil de mesure de type palpeur à coordonnées multiples selon l'une quelconque des revendications 1 à 13, dans lequel le boîtier (3) est maintenu sur une tige de serrage (41), **caractérisé**
**en ce que** le boîtier (3) et la tige de serrage (41) comportent des surfaces de contact (85) affectées les unes aux autres et perpendiculaires à l'axe de mesure (7), et sont immobilisés ensemble par au moins une vis de serrage (93) disposée dans la direction de l'axe de mesure (7),
**en ce que** le boîtier (3) ou la tige de serrage (41) porte une broche de centrage (89), centrée par rapport à l'axe de mesure de cette pièce, laquelle broche s'engage avec un jeu radial dans une ouverture centrée (87) de l'autre pièce, et
**en ce que** au moins trois vis de réglage (91) réglables par rapport à la broche de centrage (89) sont disposées radialement à l'axe de mesure (7) et réparties sur le pourtour de l'ouverture centrée (87).

15. Appareil de mesure de type palpeur à coordonnées multiples selon l'une quelconque des revendications 1 à 14 ou selon le préambule de la revendication 1 ou selon l'une quelconque des revendications 2 à 14, en faisant référence au préambule de la revendication 1, **caractérisé en ce que**
l'élément de couplage (25) ou/et l'agencement plat de guidage du boîtier (3) sont en aluminium ou en un alliage d'aluminium et forment des surfaces de roulement pour des billes de l'agencement de roulement à billes et
**en ce que** au moins la surface de roulement d'au moins un des composants - élément de couplage (25) et boîtier (3) - est pourvue d'une couche de surface anodisée (75) d'une épaisseur d'au moins 10 µm, en particulier d'au moins 6 µm.

16. Appareil de mesure de type palpeur à coordonnées multiples selon la revendication 15, **caractérisé en ce que** l'élément de couplage (25) et le boîtier (3) sont tous deux en aluminium ou en un alliage d'aluminium.

17. Appareil de mesure de type palpeur à coordonnées multiples selon la revendication 15 ou 16, **caractérisé en ce que** la surface de roulement de l'élément de couplage (25) et du boîtier (3) est réalisée par tournage ou abrasion.

18. Appareil de mesure de type palpeur à coordonnées multiples selon l'une quelconque des revendications 15 à 17, **caractérisé en ce que** les billes (65) de l'agencement de roulement à billes (27) sont un surdimensionnement, par rapport à la distance des surfaces de roulement de l'élément de couplage (25) et du boîtier (3) à l'état neuf de manière telle que, en service, elles laminent des pistes de roulement dans les surfaces de roulement.
